## Europäisches Patentamt

## European Patent Office
## Office européen des brevets

(11) Veröffentlichungsnummer: **0 144 879**
**B1**

# EUROPÄISCHE PATENTSCHRIFT

(45) Veröffentlichungstag der Patentschrift:
12.10.88

(51) Int. Cl.⁴: **B 65 D 83/00**

(21) Anmeldenummer: 84114206.0

(22) Anmeldetag: 24.11.84

(54) Spender für pastöse Massen, insbesonder Zahncremespender.

(30) Priorität: 02.12.83 DE 3343680
25.08.84 DE 8425201 U

(43) Veröffentlichungstag der Anmeldung:
19.06.85 Patentblatt 85/25

(45) Bekanntmachung des Hinweises auf die Patenterteilung:
12.10.88 Patentblatt 88/41

(84) Benannte Vertragsstaaten:
AT BE CH DE FR GB IT LI LU NL SE

(56) Entgegenhaltungen:
EP-A-0 013 691
GB-A-1 296 372
GB-A-2 062 771
US-A-3 485 419
US-A-3 987 938

(73) Patentinhaber: Bramlage GmbH,
Küstermeyerstrasse 31 Postfach 1149, D-2842
Lohne/Oldenburg (DE)

(72) Erfinder: von Schuckmann, Alfred, Kervendonk 63,
D-4178 Kevelaer 2 (DE)

(74) Vertreter: Rieder, Hans- Joachim, Dr.,
Corneliusstrasse 45 Postfach 11 04 51, D-5600
Wuppertal 11 (DE)

### Beschreibung

Die Erfindung bezieht sich auf einen Spender für pastöse Massen, insbesondere Zahncremespender, mit pumpenartiger Betätigung zur portionierten Ausgabe des Inhalts aus einem Mundstück-Auslaßkanal, wobei der durch Verlagerung einer Betätigungshandhabe entgegen Federwirkung volumenverkleinerbare Pumpenraum, im Strömungsweg gesehen, zwischen zwei Ventilen liegt, von denen das eine mit dem Vorratsraum und das andere mit dem Mundstück-Auslaßkanal verbunden ist, wobei weiter die beiden Ventile auf einer in ihrer Verlängerung durch den Mundstück-Auslaßkanal reichenden Geraden liegen, die Pumpenbetätigung quer zu dieser Geraden erfolgt und zwischen den beiden Ventilen eine Öffnung des Pumpenraumes ausgebildet ist.

Derartige Spender sind beispielsweise aus der US-PS-3 485 419, der GB-PS-1 296 372 und der GB-A1-2 062 771 bekannt. Beim Gegenstand der letztgenannten Druckschrift, von welcher die Erfindung im Stand der Technik ausgeht, sind die beiden Ventile auf einer gemeinsamen, sich mittig durch den Auslaßkanal erstreckenden Achse angeordnet. Bei Betätigung der Pumpe wird der Randbereich eines Ventiles nach innen abgebogen, so daß in dem entstehenden Spalt Masse hindurchtreten kann, während bei dem anderen Ventil, welches gleichzeitig in entgegengesetzter Richtung beaufschlagt wird, eine Anpressung des Randbereiches des Ventils an die Auslaßkanalinnenwand erfolgt. Die Bauform dieses bekannten Spenders ist relativ kompliziert und für einen Massenartikel zu herstellungs- und montageaufwendig.

Aufgabe der Erfindung ist es daher, einen gattungsgemäßen Spender herstellungs- und montagetechnisch zu vereinfachen, wobei im Hinblick auf die Strömungsverhältnisse eine bessere Vergleichmäßigung erreicht werden soll.

Diese Aufgabe ist durch die im Anspruch 1 angegebene Erfindung gelöst.

Die Unteransprüche sind vorteilhafte Weiterbildungen des erfindungsgemäßen Spenders.

Zufolge solcher Ausgestaltung ist die Fertigung und Montage wesentlich vereinfacht: Es liegt ein mehr gestreckter Förderweg vor, was strömungsgünstiger ist. Seitlich dazu liegt der Pumpenraum. Die Pumpbewegung erfolgt bedienungsbequem quer zum Förderweg. Der Pumpenraum steht nur über eine einzige, zwischen den beiden Ventilen liegende Öffnung sowohl mit dem Vorratsraum als auch mit dem Mundstück-Auslaßkanal in Verbindung. Es kommen unkomplizierte Form-Werkzeuge zum Einsatz. Die Zwischenanordnung der Öffnung erlaubt es nun, auch das dem Vorratsraum zugewandte Ventil außerhalb des Pumpenraumes anzuordnen. So lassen sich für beide Ventile als Ventilsitzflächen in einfacher Weise Wandungsabschnitte des Auslaßkanales nutzen. Es entsteht eine vor der Öffnung liegende, mit dem Ausgabeweg fluchtende, strömungsgünstigere Doppel-Ventilkammer. Der Pumpenraum selbst bleibt frei für den Hub des Pumpenkolbens, welcher nun kürzer sein kann. Baulich ist in vorteilhafter Weise so verfahren, daß die Öffnung in einem die Klappen der Ventile tragenden Bodenstück des Pumpenraums angeordnet ist. Letzteres läßt sich, was den Öffnungsquerschnitt betrifft, in Anpassung an die jeweilige Viskosität des Füllinhalts formen und, ohne den Grundkörper des Spenders verändern zu müssen, als Einsatz bequem zuordnen. Dadurch, daß das Pumpenraum-Bodenstück Zentrierschultern besitzt, zwischen denen sich die Ventilklappen erstrecken, können letztere selbst von Halte- bzw. Montagekräften freigehalten bleiben, so daß eine hohe Funktionssicherheit vorliegt. Das im Wege der lediglichen Steckverbindung zugeordnete Bodenstück wird durch die Feder der Betätigungshandhabe gegen die Stützfläche des Spendergehäuses gedrückt. Der Feder kommt so eine Doppelfunktion zu. Besondere Befestigungsmittel sind hier verzichtbar. Zur Begrenzung der Schwenkbewegung der Ventilklappen weist das Pumpenraum-Bodenstück Anschlagrippen für die Ventilklappen auf. Hierdurch kann sich die eine Ventilklappe beim Saughub auch nicht sperrend vor die Bodenstück-Öffnung legen. Die Feder kann der Betätigungshandhabe gleich angeformt sein oder aber auch in Form eines separaten Bauteiles zugeordnet werden, in welchem Falle dann der kammerinnenseitig weisende Rücken des Bodenstückes entsprechende Feder-Zentrierungsmittel aufweisen würde. Die klassische Druckfeder läßt sich im übrigen aber auch völlig dadurch einsparen, daß der Pumpenraum als sich federnd zurückstellender Balg realisiert ist.

Weiter ist es von Vorteil, daß Ein- und Auslaßquerschnitt der Ventile als Öffnungen in der Mantelwand einer dem Mundstück vorgeordneten, vom Vorratsraum abgeteilten Hammer gestaltet sind. Der ausgabebereite Anteil der Masse befindet sich nun in einer im Strömungsweg liegenden, eigenen Kammer. Letztere Kammer erfüllt praktisch eine strömungsgünstige Schleusenfunktion. Weiter ist es von Vorteil, daß das Innenvolumen der Kammer größer oder gleich ist demjenigen des der Kammer deckelartig zugeordneten Quetschkopfes. Über das Verdrängungsvolumen des Quetschkopfraumes hinaus läßt sich dabei sogar noch eine Variation der Ausgabemenge erzielen, indem der Quetschkopf noch in die anschließende Kammer ganz oder partiell eintauchen kann. Eine gebrauchssichere Zuordnung des Quetschkopfes wird erzielt durch eine Klipsverbindung zwischen Quetschkopfrand und einer hinterschnittenen Ringnut des Gehäuses. Unter Nutzung der Flexibilität bzw. Elastizität des Quetschkopfmateriales läßt sich dabei zugleich mit einfachen Mitteln die erforderliche Abdichtung erreichen. Bezüglich der angestrebten vereinfachten Bauform ist es weiter von Vorteil, daß die Ventilklappen dem Quetschkopf materialeinheitlich angeformt sind, und zwar an der Unterseite einer die Quetschkopf-Betätigungsfläche als abgewinkelte Ausbauchung tragenden, flachen Ringzone, wobei die Rückfläche der Ausbauchung einen einwärts gerichteten Knickverlauf besitzt. Ein solcher praktisch als Faltzone realisierte Knickverlauf kann im Hinblick auf die Funktion der Ventillappen so gelegt werden, daß sie im Ventilsinne arbeiten, also die in den Faltgelenkbereichen wurzelnden Lappen einerseits in Freigaberichtung und andererseits in Schließrichtung belastet werden. Auch dies trägt zur angestrebten strömungsgünstigeren Ausgestaltung bei.

Der Gegenstand der Erfindung ist nachstehend anhand mehrerer zeichnerisch veranschaulichter Ausführungsbeispiele näher erläutert. Es zeigt

Fig. 1 einen Vertikalschnitt durch den Spender gemäß dem ersten Ausführungsbeispiel,
Fig. 2 den Schnitt gemäß Linie II-II in Fig. 1,
Fig. 3 den Schnitt gemäß Linie III-III in Fig. 2,
Fig. 4 das Pumpenraum-Bodenstück in perspektivischer Einzeldarstellung, und zwar von der Ventilklappenseite her gesehen,
Fig. 5 eine entsprechende Darstellung von der Rückseite her gesehen,
Fig. 6 den Spender gemäß dem zweiten Ausführungsbeispiel, im Teilschnitt,
Fig. 7 das zugehörige Bodenstück von der Ventilklappenseite her gesehen, und zwar wiederum in perspektive,
Fig. 8 die Rückseite des Bodenstücks in Perspektive,
Fig. 9 einen Vertikalschnitt durch den Spender gemäß dem dritten Ausführungsbespiel, und zwar in Grundstellung,
Fig. 10 ein die Ventilklappen aufweisendes Einsatzteil in perspektivischer Einzeldarstellung,
Fig. 11 einen Vertikalschnitt durch den Spender gemäß dem vierten Ausführungsbespiel, ebenfalls in Grundstellung,
Fig. 12 den Schnitt gemäß Linie XII-XII in Fig. 11 und
Fig. 13 diesen Spender in der Betätigungsphase.

Das lang zylindrisch ausgebildete Gehäuse 1 des Spenders gemäß dem ersten und zweiten Ausführungsbeispiel enthält einen sich darin in Längsrichtung verlagernden Kolben 2. Letzterer weist Topfform auf. Sowohl vom Topfrand als auch vom Topfboden gehen in entgegenge setzte Richtung weisende, ringförmige Lippen 2', 2" aus. Sie führen sich dichtend an der ebenfalls zylindrischen Gehäuseinnenwandung 1'. Das Gehäuse 1 ist unten offen. Die Gehäusewandung geht dort in einen das Maß des Gehäusequerschnitts etwas überragenden Standsockel 3 über.

Das andere, dem Standsockel 3 gegenüberliegende Ende des Spenders bildet ein Mundstück 4 aus. Letzteres ist aus der Längsmittelachse x-x des Spendergehäuses 1 exzentrisch versetzt, fluchtet dort außen mit der Gehäusewandung und überragt das eigentliche Spendergehäuse um einen Längenbetrag, der im Wesentlichen dem Durchmesser des Gehäuses entspricht. Der sich zum freien Ende hin kontinuierlich verjüngende Mundstück-Auslaßkanal 5 besitzt einen Querschnitt, welcher etwa einem Fünfzehntel des Querschnitts der Füllgutsäule entspricht.

Die pastöse Masse M läßt sich über eine pumpenartige Betätigung portioniert ausgeben. Bestandteil dieser Spendermechanik ist ein räumlich unterhalb des Mundstückes 4 liegender, zylindrischer Pumpenraum 6 mit entgegen Federbelastung darin verschieblich gelagertem Pumpenkolben 7. Sein Verlagerungsweg liegt quer zur Längsmittelachse x-x bzw. Ausgaberichtung der pastösen Masse M, also quer zur durch den Mundstück-Auslaßkanal 5 reichenden Geraden y-y.

Der Pumpenkolben 7 ist ebenfalls topfförmig gestaltet. Sein etwas aus dem Pumpenraum 6 frei vorragender Topfboden bildet eine Betätigungshandhabe 8. Deren Randkante ist gefast. Der unmittelbar geführte Abschnitt des Pumpenkolbens 7 bildet auch hier auf seiner Mantelfläche in entgegengesetzte Richtung weisende, ringförmige, dichtende Lippen 7' und 7" aus. Die der Betätigungshandhabe näherliegende Lippe 7" dient zugleich als Begrenzungsanschlag in Auswartsrichtung. Sie tritt gegen eine Sperrschulter 9 an der zylindrischen Innenwandung des Pumpenraumes 6.

Vom Topfboden geht ein raumeinwärts gerichteter, zentral liegender Stehkragen 10 aus. Dieser faßt die dortige Endwindung einer Schraubengangdruckfeder 11, welche sich anderenends an Zentrierungsvorsprüngen 12 eines als Einsatz gestalteten Bodenstückes 13 des Pumpenraumes 6 abstützt. Letzterer ist strömungstechnisch zwischen zwei Ventilen V 1, V 2 angeordnet, von denen das eine V 1 dem Vorratsraum 14 und das andere dem Mundstück-Auslaßkanal 5 zugeordnet ist. Beide Ventile sind als gleichgroße Ventilklappen 15, 16 realisiert, welche dem Bodenstück auf der dem Pumpenraum 6 abgewandten Seite angeformt sind. Ihre Klappgelenkstellen bestehen aus wandungsverdünnten Stegen in Art von Filmscharnieren. Die Ventilklappen 15, 16 nehmen in Grundstellung der Mechanik eine schräg nach rechts oben ansteigende Ausrichtung ein, wobei ihre schmalen Stirnkanten 15' bzw. 16' aufgrund der Rückstellkraft des Materiales federnd an der korrespondierenden Innenwandung 17 einer zwischen Mundstückkanal 5 und Vorratsraum 14 fluchtend liegenden (Gerade y-y) Doppelventil-Kammer 18 liegen. Letztere erstreckt sich auf der dem Pumpenraum 6 gegenüberliegenden Seite des Pumpenraum-Bodenstückes 13. Der Pumpenraum 6 ist nur über eine einzige, zwischen den beiden Ventilen V 1, V 2 liegende Öffnung Ö

sowohl mit dem Vorratsraum 14 als auch mit dem Mundstück-Ausaßkanal 5 verbunden.

Auf der Ventilklappen-Seite sind dem Bodenstück Anschlagrippen 19 für die Begrenzung der Schwenkbewegung der Ventilklappen 15 bzw. 16 angeformt. Es handelt sich um kleine, im Querschnitt dreieckförmige Vorsprünge des scheibenformigen Bodenstücks 13, gegen deren vorspringende Spitze die Oberseite der Klappventile bei der Öffnungs-Schwenkbewegung anschlagen.

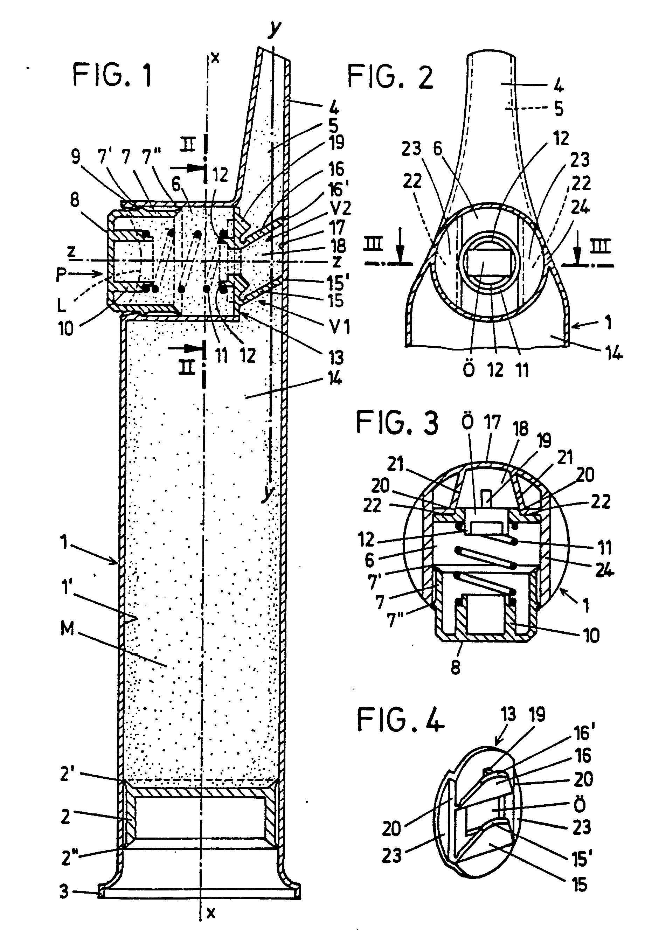

Das Pumpenraum-Bodenstück 13 bildet in vertikaler Richtung liegende Zentrierschultern 20 aus. Diese laufen in Steckrichtung konvergierend. Einen entsprechend konvergierenden Verlauf nehmen auch die in Richtung der Gehäusewandung laufenden, die korrespondierenden Zentriergegenflächen bildenden Auslaßkanalwände 21. Diese gehen von einer vertikalen Stützflächen 22 aus, gegen die sich kreisabschnittförmige Lappen 23 des partiell in die Doppel-Ventilkammer 18 eingesenkten Bodenstücks 13 anlegen. Die parallel zu Auslaßkanalwänden 21 verlaufenden Schmalseiten der Ventilklappen 15, 16 können gegenüber diesen etwas zurückspringen, so daß ein reibungsfreies, leichtgangiges Klappen vorliegt. Wie Fig. 3 entnehmbar, setzen sich die Stützflächen 22 in die den zylindrischen Pumpenraum 6 umschreibende Wandung 24 fort.

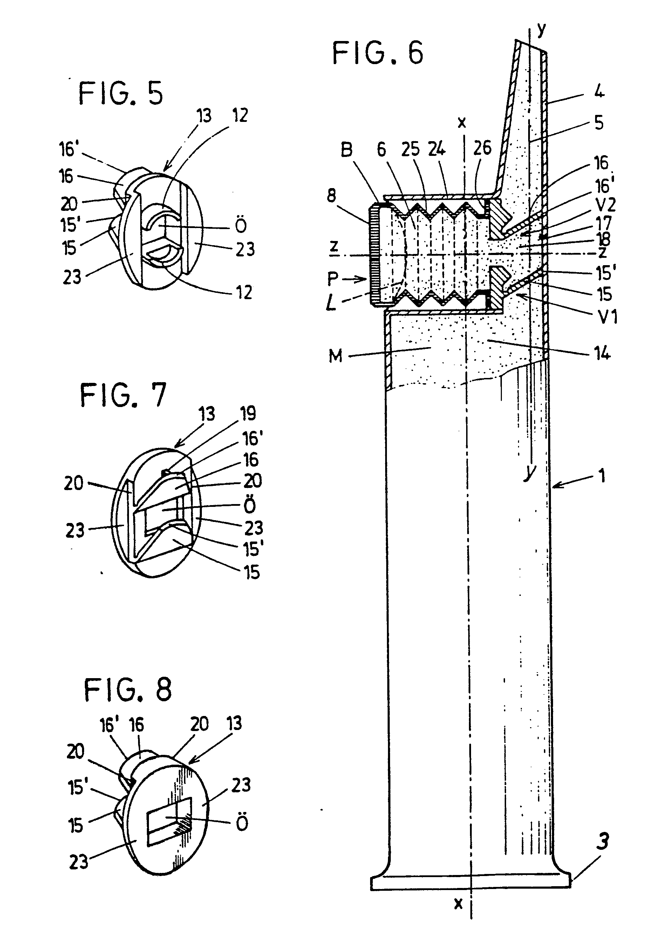

Der Unterschied des Spenders gemäß dem zweiten Ausführungsbeispiel (Fig. 6 - 8) besteht darin, daß der volumenverkleinerbare Pumpenraum dort von einem sich federnd zurückstellenden Balg B gebildet wird. Es handelt sich gleichfalls um einen topfförmigen Körper mit Betätigungshandhabe 8. Die Balgfalten 25 liegen quer zur Betätigungsrichtung P und sind bis auf das querschnittsverdickte Bodenende von gleicher Wandungsdicke. Das bodenstückseitige Ende setzt sich in einen ringförmigen, quer auswärts weisenden Befestigungsflansch 26 fort. Letzterer wird bspw. durch Klebung, Heißsiegeln oder dergleichen auf dem Rücken des Bodenstücks 13 fixiert und zusammen mit diesem in die beim ersten Ausführungsbeispiel den Pumpenraum 6 bildende Höhlung eingelassen und befestigt. Zur Befestigung des Bodenstückes kann eine nicht näher dargestellte Rastschulter dienen. Der Aufbau des Bodenstückes entspricht ansonsten dem des vorbeschriebenen Bodenstücks 13. Da der Balg B zugleich als Rückstellfeder fungiert, entfallen natürlich auch die Zentrierungsvorsprünge 12. Die äußeren Faltkehren der Balgfalten 25 stehen in gewissem Abstand zur zylindrischen Innenwand der Höhlung, so daß bei der betätigungsbedingten Querschnittsvergrößerung keine Klemmlage auftritt.

Die Montage beschränkt sich beim ersten Ausführungsbeispiel praktisch auf das Einführen des Bodenstückes 13 und das gleichzeitige oder anschließende Einsetzen der Feder 11 und des Pumpenkolbens 7.

Die Funktion der Spender ist wie folgt: Durch Druckausübung auf die Betätigungshandhabe 8 in Richtung des Pfeiles P entgegen der Kraft der Schraubengangdruckfeder 11 (oder sinngemäß entgegen der Rückstell kraft des Balges B) verringert sich das Volumen im Pumpenraum 6. Die federbedingte Rückstellung des Pumpenkolbens 7 zieht nun pastöse Masse M durch die Öffnung Ö hindurch in den Pumpenraum 6 ein unter Öffnen des Ventils V 1. Die Saugwirkung führt andererseits dazu, daß das andere Ventil V 2 geschlossen bleibt. So kann keine Luft über den Mundstück-Auslaßkanal eingesogen werden. Der Kolben 2 läuft über die Füllstandssäule nach. Sind Pumpenkammer 6 und Mundstück-Auslaßkanal 5 angefüllt, kann die portionierte Ausgabe beginnen, indem immer über das Ventil V 1 pastöse Masse in den Pumpenraum 6 eingezogen und unter Betätigungshub durch das Ventil V 2 hindurch in den Ausgabeweg gelangt und portionsweise ausgegeben wird. Bei diesem Ausgabehub wird stets das Ventil V 1 verschlossen. Zur Ausgabe gelangt jeweils eine vom Hub bestimmte Menge, die aber unterschritten werden kann, durch nur partielles Eindrücken der Betätigungshandhabe 8.

Aufgrund der Durchdringung zweier zylindrischer Figuren, einerseits des Gehäuses 1 und andererseits des quer dazu liegenden Gehäuseteils des Pumpenraums 6 ergibt sich eine konkave Durchdringungslinie L.

Die dieser Linie entsprechende Pumpenraum-Gehäusestirnkante kann in vorteilhafter Weise als Eindrück-Begrenzungsanschlag dienen, indem dort der querliegende Daumen gegentritt. Ungeachtet dessen, besteht aber aufgrund der mehr als daumenkuppengroßen Betätigungsfläche die Möglichkeit, den Pumpenkolben unter Nutzung des maximalen Betätigungshubes ganz einzuschieben, d. h. bis die vordere Lippe 7' gegen den Rücken des Bodenstücks 13 trifft. Die beiden seitlichen, konkaven Einziehungen schließen ebenengleich mit der Sperrschulter 9 ab, deren Rücken eine Auflaufschräge für die Lippen 7', 7" ausbildet, dies um die Montage zu erleichtern. Da von Kunststoffmaterial ausgegangen wird, besitzt die Sperrschulter auch eine gewisse Flexibilität. Demzufolge läßt sich das Bodenstück 13 unter Überwindung der Sperrschulter montieren.

Der Spender gemäß dem dritten und vierten Ausführungsbeispiel entspricht prinzipiell den oben beschriebenen. Die Bezugsziffern sind daher sinngemäß übertragen, ohne jedoch den Text umfassend zu wiederholen.

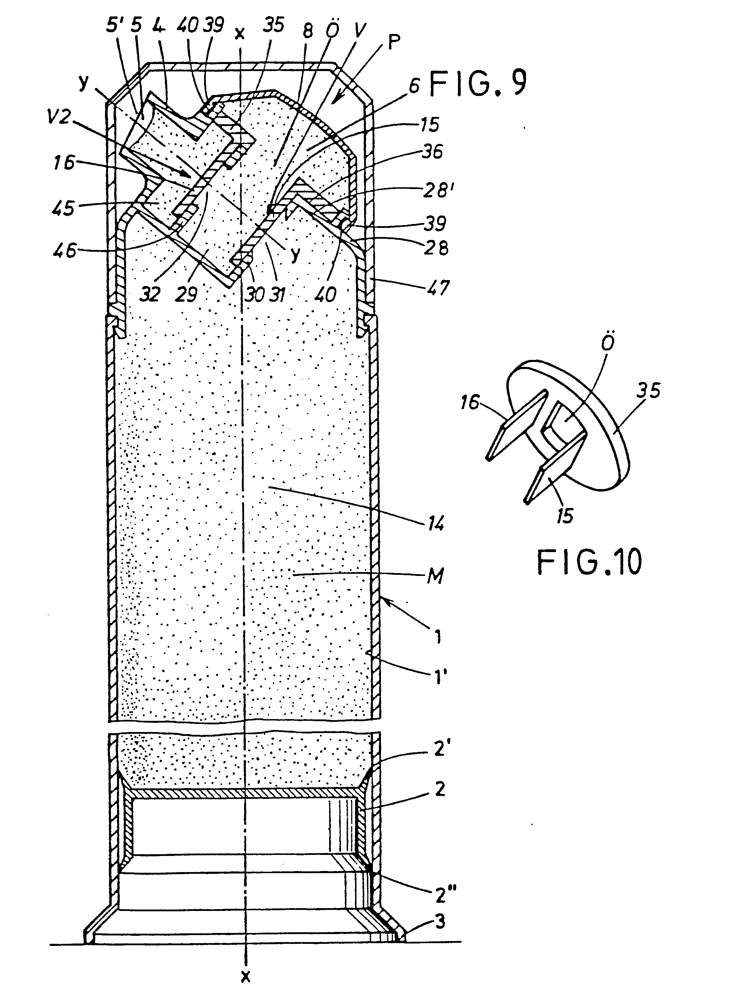

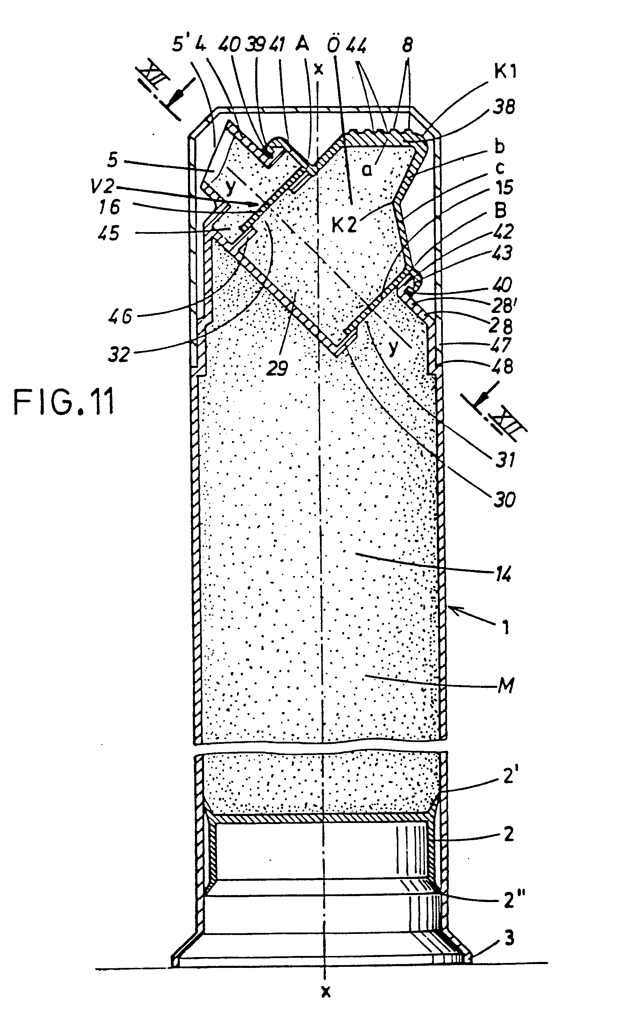

Das Mundstück 4 der Spender der Fig. 9 - 13 erstreckt sich schräg geneigt zur Längsmittelachse x-x des Spendergehäuses 1. Der Neigungswinkel beträgt ca. 45° und entspricht der in Fig. 11 wiedergegebenen Schnittverlaufslinie XII-XII.

Das Mundstück 4 kann, wie der besagten Figur entnehmbar, dem Gehäuse 1 gleich angeformt, oder aber, wie dies gemäß dem dritten Ausführungsbeispiel (Fig. 9) vorgezogen ist, als separates Kopfstück 28 realisiert sein, welches

dem oberen Gehäuserand einfach im Wege der Klipsverbindung zugeordnet wird.

Das als relativ kurzer Rohrstutzen gestaltete Mundstück 4 des separaten oder angeformten Kopfstückes 28 besitzt ein lichtes Querschnitts maß, welches etwa dem fünf- bis zehnfachen des Querschnitts der von der pastösen Masse M gebildeten Füllgutsäule entspricht. Die Öffnung 5' des Mundstück-Auslaßkanals 5 fluchtet im wesentlichen mit der Gehäusewandung des Spenders.

Zwischen dem vom überwiegenden Anteil des Gehäuses 1 gebildeten Vorratsraum 14 und dem Mundstück 4 ist dem Kopfstück 28 eine Kammer 29 angeformt. Letztere weist topfförmige Gestalt auf und ist nach oben hin offen. Im auf einer Geraden y-y liegenden Strömungsweg läßt die Mantelwand 30 der Kammer 29 fensterartige Öffnungen 31 und 32, von denen die erstere den Einlaßquerschnitt und die an zweiter Stelle genannte den Auslaßquerschnitt bildet. Letzteren sind wiederum Ventile V 1 und V 2 in Form von Ventilklappen 15 und 16 zugeordnet. Diese erstrecken sich in Ausgaberichtung vor den Öffnungen 31 und 32 und können in Ventilsitzrichtung eine leichte Vorspannung aufweisen. Die Öffnungen 31, 32 liegen auch hier auf der durch den Mundstück-Auslaßkanal 5 fluchtenden Geraden y-y.

Beim Ausführungsbeispiel gemäß den Fig. 9 und 10 gehen die Ventilklappen 15, 16 als senkrecht abstehend angeformte Lappen von einem Einsatzteil 35 aus biegeelastischem Material aus. Es entspricht im wesentlichen dem Bodenstück 13 der obigen Ausführungsbeispiel und ist als zentral zwischen den Ventilklappen 15, 16 durchbrochene Scheibe gestaltet und in eine Aufnahme 36 auf der schrägen Decke 28' des Kopfstückes 28 eingelassen. Die hier relativ große zentrale Öffnung des Einsatzteiles 35 trägt das Bezugszeichen Ö. Sie entspricht im wesentlichen der in Ausgaberichtung gemessenen Breite der Kammer 29. Über der Kammer 29 erstreckt sich ein Quetschkopf 38. Es handelt sich um eine domförmige, mit dem Kopfstück 28 verklipste Gummikappe. Gehalten ist dieser Quetschkopf im Wege einer Klipsverbindung zwischen Quetschkopfrand 39 und einer Ringnut 40 des Spendergehäuses 1 bzw. Kopfstückes 28.

Beim Ausführungsbeispiel gemäß den Fig. 11 bis 13 sind die Ventilklappen 15 und 16 dem dortigen Quetschkopf 38 materialeinheitlich einstückig angeformt. Sie gehen dort von der Unterseite einer die Quetschkopf-Betätigungshandhabe 8 als gewinkelte Ausbauchung tragenden, flachen Ringzone 41 aus, an die sich der in Form einer Ringwandung gestaltete Quetschkopfrand 39 anschließt, welcher auch bei diesem Ausführungsbeispiel in eine Ringnut 40 eingreift. Die Ringnut befindet sich außenseitig eines von der Decke 28' aus hochgezogenen Kragens 42. Dessen äußere Randkante formt eine das Aufstecken des Quetschkopfes 38 erleichternde Abschrägung 43, deren rückwärtige Flanke Bestandteil der hinterschnittenen Ringnut 40 ist.

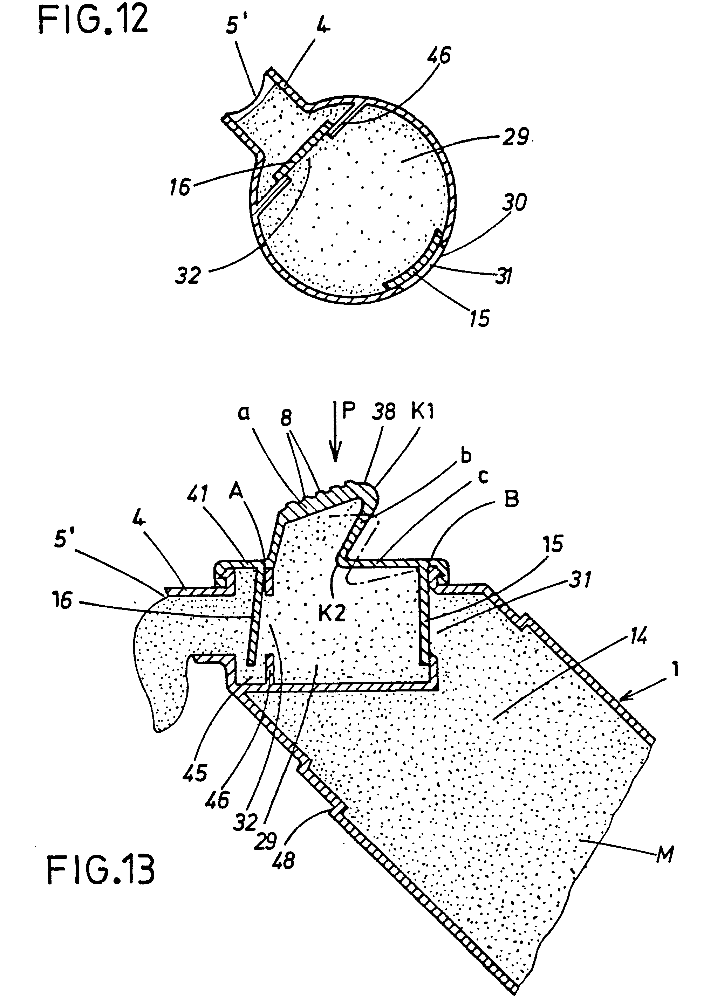

Die in normaler Standlage des Spenders horizontal ausgerichtete Quetschkopf-Betätigungshandhabe 8 weist zur Erhöhung der Griffigkeit Querriefen 44 auf. Dieser die Betätigungshandhabe bildende, querschnittsdicker gestaltete Abschnitt a läuft im Anschluß an eine spitze Kehre K 1 ein in einen spitzwinkligen, nach unten und einwärts verlaufenden Abschnitt b aus, der sich im Anschluß an eine kammereinwärts gerichtete Kehre K 2 in einen in die Ringzone 41 einlaufenden Abschnitt c fortsetzt. Dies führt zu einem ineinanderfaltbaren Knickverlauf, wobei sich die Abschnitte a und b im Winkel verringern (vergl. Fig. 13) und die stumpfwinklig zueinander stehenden, einen nach außen offenen Winkel bildenden Abschnitte b und c in eine spitzwinklige Konstellation übergehen. Diese zwangsläufige Verformung des Quetschkopfes in Richtung eines sich Zusammenlegenden "Z" führt zur sinngemäßen Belastung bzw. Unterstützung der Klappbewegung der Ventilklappen 15, 16. So wird die dem Auslaßquerschntt (Öffnung 32) zugeordnete Ventilklappe 16 um den gehäuseseitigen Stützpunkt A im Öffnungssinne gekippt und die andere, am ortsfesten Gehäusepunkt 6 angreifende Ventilklappe 15 in Schließrichtung des Ventiles belastet, da sich der kammerseitige Winkel zwischen dem Abschnitt c und der Ventilklappe 15 verkleinert (vergl. Fig. 13). So kann die durch Betätigung des Quetschkopfes 38 verdrängte Masse strömungsgünstiger ausgebracht werden, zumal das Innenvolumen der Kammer 29 größer oder gleich ist demjenigen des der Kammer 29 deckelartig zugeordneten Quetschkopfes 38. Beim Ausführungsbeispiel gemäß den Fig. 11 bis 13 ergibt sich zudem die vorteilhafte Möglichkeit, über den dem Volumen des Quetschkopfes 38 entsprechenden Anteil hinaus einen größeren Anteil auszubringen zufolge der Tatsache, daß die Quetschkopfwandung in die Kammer 29 eintauchbar bzw. eindrückbar ist.

Vor der kammeraußenseitig liegenden Ventilklappe.16 verbleibt ein genügender Freiraum 45 für das unbehinderte Abheben der dortigen Ventilklappe 16. Dieser Freiraum 45 ist querschnittsgrößer bemessen als der Querschnitt des Mundstückes 4 beträgt. Der dortige Ventilsitz ist von einer die Kammer 29 vom Freiraum abteilenden Querwand 46 des Kopfstückes 28 gebildet. Gemäß dem vierten Ausführungsbeispiel nimmt die Ventilklappe 15 eine dem Rundungsverlauf der Mantelwand-Innenfläche entsprechenden Krümmungsgrad ein (vergl. Fig. 12), was die Rückstellung in die Schließlage zusätzlich begünstigt.

Kurz Zusammengefaßt funktionieren diese Spender wie folgt: Durch Druck auf den Quetschkopf 38 in Pumpbetätigungsrichtung P, also Verlagerung seiner Betätigungshandhabe 8 quer zur Geraden y-y tritt die durch die

Ventilklappe 15 gegenüber dem Restvorrat abgeteilte, in der Kammer 29 befindliche Masse unter Anheben der Ventilklappe 16 entsprechend dem Verdrängungsvolumen aus dem Mundstück 4 aus. Durch Loslassen stellt sich der den Deckel der Kammer 29 bildende Quetschkopf 38 vermöge seiner Rückstellkraft in seine Ausgangslage zurück. Der dabei auftretende Unterdruck in der Kammer 29 führt zum Schließen der auslaßquerschnittsseitigen Ventilklappe 16 und Öffnen der anderen Ventilklappe 15, über deren Einlaßquerschnitt aus dem Vorratsraum 14 pastöse Masse M in die Kammer 29 nachgesogen wird. Der Kolben 2 läuft über die Füllstandssäule, an der er praktisch anklebt, mit.

Weist der Kolben das bekannte, einseitig wirkende Gesperre auf, so wird die Ventilklappe 15 je nach der Viskosität der pastösen Masse verzichtbar.

Dem Spender kann eine Schutzkappe 47 zugeordnet werden, deren unterer Stirnrand sich auf einer gehäuseseitigen Ringschulter 48 abstützt.

## Patentansprüche

1. Spender für pastöse Massen, insbesondere Zahncremespender, mit pumpenartiger Betätigung zur portionierten Ausgabe des Inhalts aus einem Mundstück-Auslaßkanal (5), wobei der durch Verlagerung einr Betätigungshandhabe (8) entgegen Federwirkung volumenverkleinerbare Pumpenraum (6), im Strömungsweg gesehen, zwischen zwei Ventilen (V 1, V 2) liegt, von denen das eine mit dem Vorratsraum (14) und das andere mit dem Mundstück-Auslaßkanal (5) verbunden ist, wobei weiter die beiden Ventile (V 1, V 2) auf einer in ihrer Verlängerung durch den Mundstück-Auslaßkanal reichenden Geraden (y-y) liegen, die Pumpenbetätigung (Pfeil P) quer zu dieser Geraden erfolgt und zwischen den beiden Ventilen eine Öffnung des Pumpenraumes (6) ausgebildet ist, dadurch gekennzeichnet, daß die Öffnung (Ö) in einem zwei Ventilklappen (15, 16) tragenden Bodenstück (13) des Pumpenraumes (6) angeordnet ist.

2. Spender nach Anspruch 1 dadurch gekennzeichnet, daß das Pumpenraum-Bodenstück (13) Zentrierschultern (20) besitzt, zwischen denen sich die Ventilklappen (15, 16) erstrecken.

3. Spender nach Anspruch 2, dadurch gekennzeichnet, daß das Pumpenraum-Bodenstück (13) durch die Feder (Schraubengangdruckfeder 11) der Betätigungshandhabe (8) gegen Stützflächen (22) des Spendergehäuses (1) gedrückt ist und Anschlagrippen (19) für die Ventilklappen (15, 16) aufweist.

4. Spender nach Anspruch 1, dadurch gekennzeichnet, daß der Pumpenraum (6) als sich federnd zurückstellender Balg (B) ausgebildet ist.

5. Spender nach Anspruch 1, dadurch gekennzeichnet, daß Ein- und Auslaßquerschnitt der Ventile (V 1, V 2) als Öffnungen (31, 32) in der Mantelwand (30) einer dem Mundstück (4) vorgeordneten, vom Vorratsraum (14) abgeteilten Kammer (29) gestaltet sind.

6. Spender nach Anspruch 5, dadurch gekennzeichnet, daß das Innenvolumen der Kammer (29) größer oder gleich ist demjenigen des der Kammer (29) deckelartig zugeordneten Quetschkopfes (38).

7. Spender nach Anspruch 5, gekennzeichnet durch eine Klipsverbindung zwischen Quetschkopfrand (39) und einer hinterschnittenen Ringnut (40) des Gehäuses (1).

8. Spender nach Anspruch 5, dadurch gekennzeichnet, daß die Ventilklappen (15, 16) dem Quetschkopf (38) materialeinheitlich angeformt sind, und zwar an der Unterseite einer die Quetschkopf-Betätigungsfläche als abgewinkelte Ausbauchung tragenden, flachen Ringzone (41), wobei die Rückfläche der Ausbauchung einen einwärts gerichteten Knickverlauf besitzt.

9. Spender nach Anspruch 6, dadurch gekennzeichnet, daß die Quetschkopfwandung in die Kammer (29) eintauchbar ist.

## Claims

1. Dispenser for pasty masses, in particular a toothpaste dispenser, having pumplike actuation for the portioned dispensing of the contents from a mouthpiece outlet channel (5), the pump space (6), which is reducible in volume by displacement of an actuating button (8) counter to the action of a spring, being situated, seen in the direction of flow, between two valves (V 1, V 2), one of which is connected to the reservoir (14) and the other to the mouthpiece outlet channel (5), the two valves (V 1, V 2) furthermore being situated on a straight line (y-y) which, in its extension, passes through the mouthpiece outlet channel, the pump actuation (arrow P) taking place transversely to this straight line and an opening of the pump space (6) being formed between the two valves, characterized in that the opening (Ö) is arranged in a bottom piece (13) of the pump space (6), which bottom piece bears two valve flaps (15, 16).

2. Dispenser according to Claim 1, characterized in that the pump space bottom piece (13) has centring shoulders (20), between which the valve flaps (15, 16) extend.

3. Dispenser according to Claim 2, characterized in that the pump space bottom piece (13) is pressed by the spring (helical compression spring 11) of the actuating button (8) against supporting surfaces (22) of the dispenser housing (1) and has stop ribs (19) for the valve flaps (15, 16).

4. Dispenser according to Claim 1, characterized in that the pump space (6) is

designed as a resiliently returning bellows (B).

5. Dispenser according to Claim 1,
characterized in that inlet and outlet cross sections of the valves (V 1, V 2) are designed as openings (31, 32) in the circumferential wall (30) of a chamber (29) arranged ahead of the mouthpiece (4) and partitioned from the reservoir (14).

6. Dispenser according to Claim 5,
characterized in that the inner volume of the chamber (29) is greater than or equal to that of the squeeze head (38) fitted on the chamber (29) like a cover.

7. Dispenser according, to Claim 5,
characterized by a clip connection between squeeze head rim (39) and an undercut annular groove (40) of the housing (1).

8. Dispenser according to Claim 5,
characterized in that the valve flaps (15, 16) are moulded, in the same material, onto the squeeze head (38), to be precise on the underside of a flat annular zone (41) bearing the squeeze head actuating surface as an angled protuberance, the rear surface of the protuberance having an inwardly directed kink profile.

9. Dispenser according to claim 6,
characterized in that the squeeze head wall can enter into the chamber (29).


**Revendications**

1. Distributeur de masses pâteuses, en particulier distributeur de pâte dentifrice, avec actionnement par pompage en vue d'une distribution du contenu sous forme de doses par un canal de décharge à bec (5), dans lequel l'espace de pompage (6), dont le volume peut diminuer par déplacement d'un dispositif d'actionnement (8) à l'encontre d'une force élastque, selon le parcours d'écoulement, est situé entre deux valves (V 1, V 2), dont l'une est reliée avec l'espace de stockage (14) et l'autre avec le canal de décharge à bec (5) dans lequel les deux valves (V 1, V 2) sont situées de plus sur une ligne droite (y-y) dont le prolongement passe par le canal de décharge à bec, l'actionnement de pompage (flèche P) s'effectuant transversalement à cette droite et une ouverture de l'espace de pompage (6) étant réalisée entre les deux valves, caractérisé en ce que l'ouverture (O) est disposée dans un pièce de fond (13) de l'espace de pompage (6) portant deux clapets de valves (15, 16).

2. Distributeur selon la revendication 1, caractérisé en ce que la pièce de fond de l'espace de pompage (13) comporte des épaulements de centrage (20), entre lesquels s'étendent les clapets de valve (15, 16).

3. Distributeur selon la revendication 2, caractérisé en ce que la pièce de fond (13) de l'espace de pompage est pressé contre des surfaces d'appui (22) du boîtier de distributeur (1) par le ressort (ressort de compression hélicoïdal 11) du moyen d'actionnement (8) et présente des nervures de butée (19) pour les clapets de valve (15, 16).

4. Distributeur selon la revendication 1, caractérisé en ce que l'espace de pompage (6) est réalisé sous la forme d'un soufflet (B) à rappel élastique.

5. Distributeur selon la revendication 1, caractérisé en ce que les sections transversales d'admission et de décharge des valves (V 1, V 2) sont constituées par des ouvertures (31, 32) de la paroi d'enveloppe (30) d'une chambre (29) disposée devant le bec (4) et séparée de l'espace de réserve (14).

6. Distributeur selon la revendication 5, caractérisé en ce que le volume interne de la chambre (29) est supérieur ou égal à celui de la tête de pressage (38) disposée à la façon d'un couvercle sur la chambre (29).

7. Distributeur selon la revendication 5, caractérisé par une liaison à encliquetage entre le bord (39) de la tête-poussoir et une encoche annulaire en dépouillé (40) du boîtier (1).

8. Distributeur selon la revendication 5, caractérisé en ce que les clapets de valve (15, 16) sont formés monobloc avec la tête de pressage (38), et de façon précise à la partie inférieure d'une zone annulaire plate (41), portant la surface d'actionnement de la tête de pressage sous la forme d'une protubérance angulaire tandis que la surface arrière de la protubérance présente un tracé coudé dirigé vers l'intérieur.

9. Distributeur selon la revendication 6, caractérisé en ce que la paroi de la tête de pressage peut être plongée dans la chambre (29).

FIG. 1

FIG. 2

FIG. 3

FIG. 4

FIG. 5

FIG. 7

FIG. 8

FIG. 6

FIG. 9

FIG. 10

FIG.11

FIG.12

5'  4  46

16

29

32

30

31

15

a  8  ↓P  38  K1

41  A  b  c  B

5'  4

16  15  31

K2  14

45  1

46

32  M

29  48

FIG.13